# EUROPÄISCHE PATENTANMELDUNG

(11) **EP 4 818 843 A1**
(43) Veröffentlichungstag der Anmeldung: **07.10.2026**
(21) Anmeldenummer: 25167590.6
(22) Anmeldetag: 31.03.2025
(51) Int. Cl.: G05D 1/695, G05D 105/20, G05D 107/13, G05D 109/10

(54) **VERBINDUNGSEINRICHTUNG**

(71) Anmelder: Höllwart, Johann, 8042 Graz (AT)
(72) Erfinder: Höllwart, Johann, 8042 Graz (AT)
(74) Vertreter: Schardmüller Gall-Schuhmann Patentanwälte OG

(57) **Zusammenfassung**

Die Erfindung betrifft ein System umfassend zumindest ein erstes autonomes Fahrzeug, ein zweites autonomes Fahrzeug und eine Verbindungseinrichtung, über welche Verbindungseinrichtung das erste Fahrzeug mit dem zweiten Fahrzeug verbunden ist, wobei die Verbindungseinrichtung zumindest eine Sensoreinrichtung zur Erfassung zumindest eines Betriebszustands des ersten Fahrzeugs, des zweiten Fahrzeugs und/oder der Verbindungseinrichtung umfasst, und wobei das erste Fahrzeug, das zweite Fahrzeug und/oder die Verbindungseinrichtung eine Recheneinrichtung aufweist oder aufweisen, welche Recheneinrichtung zur Generierung von Steuerungssignalen für das erste Fahrzeug und/oder das zweite Fahrzeug auf Basis von Messdaten der Sensoreinrichtung ausgebildet ist.

## Beschreibung

Die vorliegende Erfindung betrifft ein System umfassend zumindest ein erstes, insbesondere elektrisch angetriebenes, autonomes Fahrzeug, ein zweites, insbesondere elektrisch angetriebenes, autonomes Fahrzeug und eine Verbindungseinrichtung, über welche Verbindungseinrichtung das erste Fahrzeug mit dem zweiten Fahrzeug verbunden ist. Weiters betrifft die Erfindung ein Verfahren zur Steuerung des Systems, sowie ein autonomes Fahrzeug umfassend einen auf dem Fahrzeug montierten Manipulator.

### Stand der Technik

Autonomes Fahren gewinnt zunehmend an Bedeutung - nicht nur im Bereich des Individualverkehrs, sondern auch im Bereich des Gütertransports bzw. der Logistik.

Autonome Fahrzeuge müssen in der Lage sein, sicher mit einer komplexen und sich ständig verändernden Umgebung umzugehen. Dies erfordert fortschrittliche Sensoren, leistungsstarke Rechenleistung und robuste KI-basierte Software, die unvorhersehbare Situationen bewältigen kann. Zudem müssen autonome Fahrzeuge untereinander und mit der Verkehrsinfrastruktur kommunizieren, was die Gefahr von Cyberangriffen birgt. Auch müssen hochpräzise Karten des jeweiligen Einsatzgebietes verfügbar sein, um autonomes Fahren zuverlässig zu ermöglichen bzw. zu erleichtern. Schließlich stellt die Unfallrekonstruktion in der Praxis eine Herausforderung dar.

Insbesondere in komplexen städtischen Umgebungen mit vielen Hindernissen, einer hohen Bevölkerungsdichte und variierenden Verkehrsregeln können sich Herausforderungen, auch rechtlicher Natur, für den Einsatz autonomer Fahrzeuge ergeben.

### Offenbarung der Erfindung

Die vorliegende Erfindung hat sich daher die Aufgabe gestellt, einen Beitrag zur Lösung der eingangs beschriebenen Probleme zu liefern. Insbesondere soll die Möglichkeit geschaffen werden, autonome Fahrzeuge in bestimmten Gebieten mit erhöhter Betriebssicherheit auszustatten. Darüber hinaus sollen autonome Fahrzeuge mit zusätzlicher Funktionalität ausgestattet werden können, um den jeweiligen Anforderungen, insbesondere in Bezug auf eine noch präzisere und noch sicherere Bewegung der autonomen Fahrzeuge, noch besser entsprechen zu können. Weitere Aufgaben der Erfindung ergeben sich aus der vorliegenden Beschreibung.

Eine Aufgabe der Erfindung wird gelöst durch ein System umfassend zumindest ein erstes, insbesondere elektrisch angetriebenes, autonomes Fahrzeug, ein zweites, insbesondere elektrisch angetriebenes, autonomes Fahrzeug und eine Verbindungseinrichtung, über welche Verbindungseinrichtung das erste Fahrzeug mit dem zweiten Fahrzeug verbunden ist, wobei die Verbindungseinrichtung zumindest eine erste Kupplung zur Herstellung einer lösbaren Verbindung mit dem ersten Fahrzeug, eine zweite Kupplung zur Herstellung einer lösbaren Verbindung mit dem zweiten Fahrzeug, sowie eine Sensoreinrichtung zur Erfassung zumindest eines Betriebszustands des ersten Fahrzeugs, des zweiten Fahrzeugs und/oder der Verbindungseinrichtung umfasst, und wobei das erste Fahrzeug, das zweite Fahrzeug und/oder die Verbindungseinrichtung eine Recheneinrichtung aufweist oder aufweisen, welche Recheneinrichtung zur Generierung von Steuerungssignalen für das erste Fahrzeug und/oder das zweite Fahrzeug auf Basis von Messdaten der Sensoreinrichtung ausgebildet ist. Gegebenenfalls kann die Recheneinrichtung zur Übermittlung von Steuerungssignalen an das erste Fahrzeug und/oder das zweite Fahrzeug ausgebildet sein.

Autonome Fahrzeuge über eine (physische) Verbindungseinrichtung miteinander zu koppeln, steht in einem gewissen Widerspruch zu dem Konzept autonomer Fahrzeuge. Solche Fahrzeuge zeichnen sich ja gerade dadurch aus, dass sie sich autonom, also selbstständig bzw. ohne externes Eingreifen, von einem Ort an einen anderen Ort begeben können. Diese Fahrzeuge sind dabei nicht ferngesteuert, sondern generieren die benötigten Steuerungssignale selbstständig, etwa auf Basis von Sensordaten. Lediglich der zu erreichende Zielort oder eine dem Fahrzeug zugewiesene Aufgabe, aus der sich ein oder mehrere Zielorte ergeben, werden vorgegeben. Demnach wäre es nicht notwendig, zwei autonome Fahrzeuge über eine Verbindungseinrichtung miteinander zu koppeln; man könnte schlichtweg beiden Fahrzeugen denselben Zielort (oder dieselbe Aufgabe, etc.) vorgeben, sodass sich beide Fahrzeuge, unabhängig voneinander, aber aufeinander Rücksicht nehmend, zu diesem Zielort begeben können. Durch Vorsehen der erfindungsgemäßen Verbindungseinrichtung ergeben sich jedoch mehrere Vorteile, darunter etwa die Möglichkeit, autonome Fahrzeuge auch in Bereichen mit erhöhten Sicherheitsanforderungen einsetzen zu können. Die Verbindungseinrichtung legt nämlich die Position, an der sich das zweite Fahrzeug befinden kann, wenn es mittels der Verbindungseinrichtung mit dem ersten Fahrzeug verbunden ist, in Bezug auf die Position des ersten Fahrzeugs in gewisser Weise fest. Zugleich bleibt es aber möglich, die Vorteile, die die Autonomie der Fahrzeuge mit sich bringt, weiterhin zu nutzen. Durch die Sensoreinrichtung können Informationen über den Betriebszustand der Fahrzeuge (oder nur eines der beiden Fahrzeuge) und/oder der Verbindungseinrichtung erfasst und bei der Generierung von Steuerungssignalen für eines der beiden oder für beide Fahrzeuge zu berücksichtigen. Hierdurch kann beispielsweise die Spurtreue zwischen den beiden Fahrzeugen erhöht werden. Zusätzlich oder alternativ lassen sich hierdurch aber auch Zug- und Druckkräfte, die auf die Verbindungseinrichtung - etwa aufgrund einer suboptimalen Steuerung eines der beiden Fahrzeuge - frühzeitig erkennen. In diesem Fall kann der aktuelle Kurs des ersten Fahrzeugs und/oder des zweiten Fahrzeugs umgehend korrigiert werden, um drohende Unfälle zu vermeiden.

Spurtreue bezeichnet hier die Fähigkeit zweier miteinander verbundener Fahrzeuge, wie etwa dem Fahrzeugzug aus erstem Fahrzeug und zweitem Fahrzeug, ihre Bewegungen so zu koordinieren, dass das zweite Fahrzeug (exakt) der Spur des ersten Fahrzeugs folgt. Dies ist besonders wichtig für die Stabilität und Sicherheit während der Fahrt, da es verhindert, dass das zweite Fahrzeug seitlich ausschert oder unkontrolliert schwingt.

Gemäß einer bevorzugten Ausführungsform ist vorgesehen, dass die Sensoreinrichtung zumindest einen Neigungssensor zur Erfassung einer Neigung des ersten Fahrzeugs, des zweiten Fahrzeugs und/oder der Verbindungseinrichtung umfasst.

Hierdurch wird es möglich, ungünstige (Neigungs-) Lagen der Fahrzeuge oder der Verbindungseinrichtung für die Korrektur des aktuellen Kurses der Fahrzeuge heranzuziehen. Dies ist besonders vorteilhaft, wenn zur Korrektur der Lage des einen (beispielsweise des zweiten) Fahrzeugs eine Kurskorrektur des anderen (beispielsweise des ersten) Fahrzeugs genutzt werden kann. Insbesondere, wenn sich ein Fahrzeug gerade in schwierigem Terrain befindet, kann hierdurch eine besonders effektive und sichere Steuerung der Fahrzeuge sichergestellt werden. Hier und im Folgenden kann unter der Bezugnahme auf "die (beiden) Fahrzeuge" entweder nur das erste Fahrzeug, oder nur das zweite Fahrzeug, oder aber beide Fahrzeuge, also das erste Fahrzeug und das zweite Fahrzeug, verstanden werden.

Gemäß einer bevorzugten Ausführungsform ist vorgesehen, dass die Sensoreinrichtung zumindest einen Kraftsensor zur Erfassung von Zug- und Druckkräften umfasst.

Grundsätzlich kann es vorteilhaft sein, wenn auf die Verbindungseinrichtung keine Kräfte wirken, während die Fahrzeuge mittels der Verbindungseinrichtung verbunden und in Bewegung sind. Hier auftretende Zug- und Druckkräfte können, in bestimmten Betriebszuständen der Fahrzeuge, auf ein sich abzeichnendes Problem hinweisen, das unbehoben über kurz oder lang zu einem Unfall führen kann. Die Erfassung solcher Kräfte ist daher vorteilhaft, um solche Unfälle zu vermeiden.

Gemäß einer bevorzugten Ausführungsform ist vorgesehen, dass die Sensoreinrichtung zumindest ein Gyroskop zur Erfassung von Lage- und/oder Richtungsänderungen.

Auf diese Weise können Änderungen in Bezug auf eine aktuelle Lage und Richtung der Fahrzeuge genutzt werden, um einen intendierten Kurs, der beispielsweise die Spurtreue maximieren und so zu einer besonders wenig Raum einnehmenden Bewegung der beiden Fahrzeuge beitragen soll, bestmöglich beizubehalten. Gerade auf schwierigem Terrain können Unebenheiten im Gelände dazu führen, dass eines der beiden oder sogar beide Fahrzeuge seinen aktuellen Kurs derart abändern muss, dass sich eine signifikante Abweichung des aus beiden Fahrzeugen bestehenden Fahrzeugzugs vom intendierten Kurs ergibt. Dies kann von der Sensoreinrichtung erfasst und zur Korrektur des abweichenden Fahrzeugkurses verwendet werden.

Gemäß einer bevorzugten Ausführungsform ist vorgesehen, dass die Sensoreinrichtung zumindest einen Drehratensensor zur Erfassung einer Rotationsgeschwindigkeit des ersten Fahrzeugs, des zweiten Fahrzeugs und/oder der Verbindungseinrichtung umfasst.

Hierdurch können noch präzisere Steuerungssignale generiert werden, die Abweichungen vom intendierten Kurs korrigieren können.

Gemäß einer bevorzugten Ausführungsform ist vorgesehen, dass die Verbindungseinrichtung zumindest ein, vorzugsweise GPS-fähiges, Navigationssystem zur Positionsbestimmung, Richtungsbestimmung und/oder Geschwindigkeitsbestimmung umfasst.

Hierdurch wird es möglich, die Fahrzeuge bzw. den aus dem mittels der Verbindungseinrichtung miteinander verbundenen Fahrzeugzug mit zusätzlicher Funktionalität auszustatten. Beispielsweise können die Fahrzeuge selbst ohne ein entsprechendes Navigationssystem ausgeführt sein; dies wird insbesondere dann vorteilhaft sein, wenn die Fahrzeuge primär für den Einsatz in einem bestimmten Einsatzgebiet, etwa einem Betriebsgelände, konzipiert sind, für welchen Einsatz ein solches Navigationssystem schlichtweg nicht notwendig ist - beispielsweise aufgrund des Vorhandenseins anderer Navigationshilfen bzw. -mittel vor Ort. Durch die Nachrüstung des Navigationssystems über die Verbindungseinrichtung wird der Fahrzeugzug mit (Navigations-) Funktionen ausgestattet, die insbesondere zum Erreichen von Zielorten, die außerhalb des jeweiligen Einsatzgebietes liegen, vorteilhaft oder sogar notwendig sind, etwa wenn der Zielort in Form von GPS-Koordinaten übermittelt wird.

Gemäß einer bevorzugten Ausführungsform ist vorgesehen, dass die erste Kupplung und/oder die zweite Kupplung als Kugelkopfkupplung oder Zugkugelkupplung ausgebildet ist bzw. sind, welche Kugelkopfkupplung oder Zugkugelkupplung zumindest einen Hall-Sensor umfasst.

Hierbei kann die Verbindung zwischen erstem Fahrzeug und zweitem Fahrzeug besonders rasch und einfach hergestellt werden. Zudem bietet dieses Ausführungsform den Vorteil, dass eine räumliche Erfassung der Orientierung und/oder Positionierung der Fahrzeuge relativ zur jeweiligen Kupplung der Verbindungseinrichtung auf besonders einfache und zuverlässige Weise erfolgen kann. Insbesondere kann ein Hall-Sensor zur Erfassung der Drehposition eines drehbar in der jeweiligen Kupplung gelagerten Bauteils des jeweiligen Fahrzeugs genutzt werden, indem ein Magnet an dem drehbaren Bauteil vorgesehen ist und der Sensor stationär an der Verbindungseinrichtung, insbesondere einer Kugelpfanne, positioniert ist. Während sich das (kugelförmige) Bauteil in der Kugelpfanne dreht, insbesondere weil das jeweilige Fahrzeug seine relative Position/Orientierung in Bezug auf die Verbindungseinrichtung verändert, erfasst der Sensor die Magnetfeldänderungen und bestimmt daraus den Drehwinkel. Durch den Einsatz eines 3D-Hall-Sensors können sogar die vollen räumlichen Magnetfeldkomponenten analysiert werden, wodurch eine hochpräzise Orientierungsbestimmung möglich wird. Diese Methode ist kontaktlos, verschleißfrei und unempfindlich gegenüber Umwelteinflüssen, was sie ideal für Anwendungen in Fahrzeugen, insbesondere dem Fahrzeugzug, macht.

Gemäß einer bevorzugten Ausführungsform ist vorgesehen, dass die Recheneinrichtung dazu eingerichtet ist, Messdaten des ersten Fahrzeugs und/oder des zweiten Fahrzeugs zu empfangen und bei der Generierung der Steuerungssignale zu berücksichtigen.

Bei dieser Ausführungsform werden nicht nur Messdaten der Sensoreinrichtung, sondern auch solche Messdaten bei der Generierung der Steuerungssignale berücksichtigt, die von den Fahrzeugen selbst erfasst wurden. Hierdurch kann eine noch exaktere Steuerung der Fahrzeuge realisiert werden. Zudem ergeben sich Synergieeffekte, wenn Informationen, die von der Sensoreinrichtung der Verbindungseinrichtung stammen, mit solchen Informationen, die die Fahrzeuge selbst erfasst haben, kombiniert werden.

Gemäß einer bevorzugten Ausführungsform ist vorgesehen, dass die Recheneinrichtung dazu eingerichtet ist, die Steuerungssignale für das zweite Fahrzeug derart zu generieren, dass das erste Fahrzeug und das zweite Fahrzeug, zumindest innerhalb eines vorgebbaren Toleranzbereiches, spurtreu sind.

Die Spurtreue (oder spurtreue Führung) der beiden Fahrzeuge bietet mehrere Vorteile: Sie erhöht die Sicherheit, indem sie das Risiko von Kollisionen minimiert, optimiert den Energieverbrauch durch reduzierte Lenkbewegungen, und sorgt für eine ruhigere Fahrt. Zudem benötigen spurtreue Fahrzeuge weniger Platz und sind entscheidend für die präzise Funktion und Zuverlässigkeit automatisierter bzw. autonomer Fahrsysteme. Insgesamt tragen diese Vorteile zu einer sichereren, effizienteren und komfortableren Nutzung der Fahrzeuge, insbesondere der mittels der Verbindungseinrichtung zu einem Fahrzeugzug zusammengeschlossenen Fahrzeuge, bei.

Gemäß einer bevorzugten Ausführungsform ist vorgesehen, dass die Recheneinrichtung dazu eingerichtet ist, die Steuerungssignale für das zweite Fahrzeug derart zu generieren, dass das zweite Fahrzeug unter Zug über die Verbindungseinrichtung mit dem ersten Fahrzeug verbunden ist.

Obwohl es möglich wäre, dass sich beide Fahrzeuge so bewegen, dass auf die Verbindungseinrichtung keinerlei Kräfte wirken, ist bei dieser Ausführungsform vorgesehen, dass die Fahrzeuge unter Zug miteinander verbunden sind. Die kombinierte Zugkraft ermöglicht das Ziehen schwererer Lasten und das Überwinden von schwierigem Gelände. Die Verbindung bietet zudem höhere Manövrierfähigkeit und Anpassungsfähigkeit an besonders schwieriges Terrain, erhöht die Stabilität und Sicherheit der Bewegung und optimiert den Energieverbrauch, was die Effizienz steigert.

Gemäß einer bevorzugten Ausführungsform ist vorgesehen, dass die Recheneinrichtung dazu eingerichtet ist, bei der Generierung von Steuerungssignalen für das zweite Fahrzeug für einen in der Zukunft liegenden Zeitpunkt eine Lenkbewegung und/oder eine Geschwindigkeitsänderung des ersten Fahrzeugs in einem in der Vergangenheit liegenden Zeitpunkt zu berücksichtigen.

Zusätzlich zu den Informationen, die von der Sensoreinrichtung erfasst werden, werden bei dieser Ausführungsform auch Informationen über die Bewegung des ersten Fahrzeugs berücksichtigt, wenn die Steuerungssignale für das zweite Fahrzeug generiert werden. Hierdurch kann eine noch ruhigere Bewegung des Fahrzeugzugs ermöglicht und die Spurtreue der beiden Fahrzeuge weiter erhöht werden.

Gemäß einer bevorzugten Ausführungsform ist vorgesehen, dass die Recheneinrichtung dazu eingerichtet ist, bei der Generierung von Steuerungssignalen für das zweite Fahrzeug für einen in der Zukunft liegenden Zeitpunkt einen Track des ersten Fahrzeugs oder eine tatsächlich von dem ersten Fahrzeug zurückgelegte Strecke des ersten Fahrzeugs zu berücksichtigen.

In der Navigation wird der Track als die tatsächlich zurückgelegte Strecke eines Fahrzeugs beschrieben, die beispielsweise mithilfe von GPS oder anderen Ortungssystemen aufgezeichnet wird. Diese Daten helfen dabei, die genaue Route und eventuelle Abweichungen vom geplanten Kurs zu analysieren. Diese Berücksichtigung ermöglicht eine noch exaktere Abstimmung der Lenkbewegungen, Geschwindigkeiten und/oder Geschwindigkeitsänderungen der Fahrzeuge untereinander. Insbesondere können dadurch aber auch Schwierigkeiten, etwa Hindernisse, die das erste Fahrzeug beim Zurücklegen der Strecke festgestellt bzw. überwunden hat, erkannt und bei der Generierung der Steuerungssignale für das zweite Fahrzeug berücksichtigt werden. Insgesamt lässt sich hierdurch die Effizienz des Systems (bzw. des Fahrzeugzugs) verbessern.

Gemäß einer bevorzugten Ausführungsform ist vorgesehen, dass die Verbindungseinrichtung drehbar mit dem ersten Fahrzeug und dem zweiten Fahrzeug verbunden ist.

Hierdurch lässt sich die Flexibilität der Verbindung erhöhen, was in einer verbesserten Bewegungsfreiheit des Systems (bzw. des Fahrzeugzugs) resultiert. Zudem kann durch diese Maßnahme der Aufbau des ersten Fahrzeugs und des zweiten Fahrzeugs möglichst einfach gehalten werden, da die Fahrzeuge in jenen Bereichen, in denen das jeweilige Fahrzeug mit der jeweiligen Kupplung der Verbindungseinrichtung verbunden ist, keine beweglichen Teile aufweisen muss.

Gemäß einer bevorzugten Ausführungsform ist vorgesehen, dass die Verbindungseinrichtung ein starres Distanzelement aufweist, wobei an einem ersten Ende des Distanzelementes die erste Kupplung und an einem zweiten Ende des Distanzelementes die zweite Kupplung vorgesehen ist.

Anders als bei flexiblen Verbindungen ermöglicht die erfindungsgemäße Verbindungseinrichtung in dieser Ausführungsform eine kräfteübertragende Verbindung zwischen den beiden Fahrzeugen. Dies verleiht dem System eine zusätzliche Sicherheitskomponente. Eine starre Verbindung zwischen den beiden Fahrzeugen bietet nämlich gleich mehrere Vorteile. Sie sorgt für eine stabile und sichere Kopplung, die das Risiko von Schlingern oder unkontrollierten Bewegungen, insbesondere des zweiten Fahrzeugs, minimiert. Dies verbessert die Fahrstabilität und Kontrolle, insbesondere bei hohen Geschwindigkeiten oder in Kurven. Zudem ermöglicht eine starre Verbindung eine präzise Übertragung von Lenkbewegungen und Bremskräften, was die Gesamtsicherheit des Fahrzeugzugs oder Systems erhöht.

Gemäß einer bevorzugten Ausführungsform ist vorgesehen, dass die Verbindungseinrichtung, insbesondere das Distanzelement, eine Länge von 0,5 m bis 2,5 m, vorzugsweise 1 m bis 2 m, besonders bevorzugt von etwa 1,5 m, aufweist.

Damit kann die Manövrierfähigkeit des Fahrzeugzugs gewährleistet, dieser gleichzeitig aber auch möglichst kompakt gehalten werden.

Gemäß einer bevorzugten Ausführungsform ist vorgesehen, dass das erste Fahrzeug und/oder das zweite Fahrzeug Einzelradaufhängungen aufweist oder aufweisen, wobei insbesondere sämtliche Räder des ersten Fahrzeugs und des zweiten Fahrzeugs mittels Einzelradaufhängung befestigt sind.

Einzelradaufhängungen bzw. die an Einzelradaufhängungen befestigten Räder bieten den Vorteil, dass jedes Rad unabhängig auf Unebenheiten reagieren kann, was den Fahrkomfort und die Straßenlage verbessert. Zudem ermöglicht diese Bauweise eine präzisere Kontrolle über die Radgeometrie, was die Fahreigenschaften und Sicherheit des Fahrzeugzugs bzw. Systems erhöht.

Gemäß einer bevorzugten Ausführungsform ist vorgesehen, dass sämtliche Räder des ersten Fahrzeugs und/oder des zweiten Fahrzeugs einzeln antreibbar und/oder lenkbar sind.

Einzelradlenkung und/oder separat antreibbare Räder bieten den Vorteil, dass jedes Rad individuell gesteuert werden kann, was die Manövrierfähigkeit und Stabilität des Fahrzeugs erheblich verbessert. Dies ermöglicht präzisere Lenkbewegungen und eine bessere Anpassung an unterschiedliche Fahrbedingungen. Somit bietet diese Ausführungsform Vorteile hinsichtlich Funktionalität, Einsetzbarkeit und Zuverlässigkeit des Systems.

Eine Aufgabe der Erfindung wird gelöst durch ein Verfahren zur Steuerung eines Systems, das System umfassend zumindest ein erstes, insbesondere elektrisch angetriebenes, autonomes Fahrzeug, ein zweites, insbesondere elektrisch angetriebenes, autonomes Fahrzeug und eine Verbindungseinrichtung, über welche Verbindungseinrichtung das erste Fahrzeug mit dem zweiten Fahrzeug verbunden ist, wobei die Verbindungseinrichtung zumindest eine erste Kupplung zur Herstellung einer lösbaren Verbindung mit dem ersten Fahrzeug, eine zweite Kupplung zur Herstellung einer lösbaren Verbindung mit dem zweiten Fahrzeug, sowie eine Sensoreinrichtung umfasst, welche Sensoreinrichtung zumindest einen Betriebszustand des ersten Fahrzeugs, des zweiten Fahrzeugs und/oder der Verbindungseinrichtung erfasst, und wobei das erste Fahrzeug, das zweite Fahrzeug und/oder die Verbindungseinrichtung eine Recheneinrichtung aufweist oder aufweisen, welche Recheneinrichtung auf Basis von Messdaten der Sensoreinrichtung Steuerungssignale für das erste Fahrzeug und/oder das zweite Fahrzeug generiert und die generierten Steuerungssignale gegebenenfalls an das erste Fahrzeug und/oder das zweite Fahrzeug übermittelt.

Durch dieses Verfahren können die oben im Zusammenhang mit dem System beschriebenen Vorteile realisiert werden. Bevorzugte Ausführungsformen des Verfahrens können Merkmale der bevorzugten Ausführungsformen des Systems bzw. analoge Verfahrensmerkmale umfassen.

Eine Aufgabe der Erfindung wird durch ein autonomes Fahrzeug umfassend einen auf dem Fahrzeug montierten oder montierbaren Manipulator gelöst, wobei der Manipulator als autonomes System ausgebildet ist.

Ein autonomes System kann dabei als ein technisches System verstanden werden, das in der Lage ist, selbstständig und ohne menschliches Eingreifen zu operieren. Es kann Algorithmen und Sensoren nutzen, um seine Umgebung zu erfassen, Entscheidungen zu treffen und Aktionen auszuführen. Diese Systeme sind darauf ausgelegt, Aufgaben effizient und präzise zu erledigen, indem sie kontinuierlich Daten analysieren und ihre Strategien anpassen.

Anders als im Stand der Technik, aus dem Fahrzeuge mit Manipulatoren, etwa in Form von mobilen Manipulatoren, grundsätzlich bekannt sind, zeichnet sich das erfindungsgemäße Fahrzeug dadurch aus, dass zwei autonome Systeme vorgesehen sind, die voneinander unabhängig agieren können. Das autonome Fahrzeug und der autonome Manipulator können hierbei parallel zueinander arbeiten, was die Effizienz und Geschwindigkeit der Aufgabenbearbeitung verbessert bzw. erhöht. Zudem ermöglicht dies die Spezialisierung jedes Systems - nämlich des Fahrzeugs und des Manipulators - auf unterschiedliche Aufgaben und führt damit zu einer höheren Präzision und Zuverlässigkeit bei der Erfüllung der jeweiligen Aufgabe. Durch die Verteilung der Aufgaben auf verschiedene Systeme wird zudem die Ausfallsicherheit verbessert, da der Ausfall eines autonomen Systems (Fahrzeug) nicht das andere autonome System (Manipulator) beeinträchtigt. Schließlich kann die Flexibilität und Anpassungsfähigkeit des Gesamtsystems gesteigert werden, da jedes autonome System unabhängig auf Veränderungen in seiner Umgebung reagieren kann. Insbesondere wenn die Systeme auf Basis von (vorzugsweise KI-gestützten) Computermodellen betrieben werden, können hierdurch Synergien entstehen. Zudem ergeben sich Vorteile hinsichtlich des Aufbaus des jeweiligen Systems, da jedes System lediglich die zur Erfüllung einer eigenen Aufgabe(n) notwendigen Komponenten aufweisen muss. Außerdem bietet die geschaffene Modularität Vorteile hinsichtlich der Einsatzmöglichkeiten des Fahrzeugs, zumal je nach Anwendungsfall unterschiedliche Manipulatoren auf dem Fahrzeug montiert werden können.

Gemäß einer bevorzugten Ausführungsform ist vorgesehen, dass der Manipulator über eine Sensoreinrichtung verfügt und das autonome Fahrzeug und/oder der Manipulator dazu eingerichtet ist bzw. sind, auf Basis von Steuerungssignalen, welche Steuerungssignale unter Berücksichtigung von Messdaten der Sensoreinrichtung generiert werden, zu operieren.

Nicht nur kann der Manipulator hierdurch seine Umgebung überwachen, Aufgaben selbstständig erkennen und erledigen; dadurch, dass das autonome Fahrzeug bei dieser Ausführungsform (auch) auf Basis von Messdaten des Manipulators betrieben werden bzw. operieren kann, kann das Fahrzeug effektiv auf die Sensoreinrichtung als zusätzlichen Sensor zugreifen, wodurch ein noch genauerer und effizienterer Betrieb des Fahrzeugs ermöglicht ist.

Gemäß einer bevorzugten Ausführungsform ist vorgesehen, dass der Manipulator durch ein Greifsystem, insbesondere einen Manipulatorarm mit einem Greifer, oder einen Greifarm, ausgebildet ist oder ein solches Greifsystem, insbesondere Greifarm, umfasst.

Hierdurch wird das Fahrzeug mit einer Funktionalität ausgestattet, die die Erfüllung vielseitiger Aufgaben ermöglicht, etwa die Bergung von Personen oder Gegenständen aus Risikogebieten, etwa Kampfgebieten.

Gemäß einer bevorzugten Ausführungsform ist vorgesehen, dass die Sensoreinrichtung durch ein Bildaufnahmesystem, insbesondere eine Kamera, ausgebildet ist oder ein solches Bildaufnahmesystem, insbesondere Kamera, umfasst.

Gemäß einer bevorzugten Ausführungsform ist vorgesehen, dass der Manipulator ein Bildverarbeitungssystem umfasst, welches Bildverarbeitungssystem dazu eingerichtet ist, Messdaten der Sensoreinrichtung und/oder von Sensoren des autonomen Fahrzeugs zu verarbeiten. Die Steuerungssignale können auf Basis dieser Verarbeitung generiert werden.

Gemäß einer bevorzugten Ausführungsform des erfindungsgemäßen Systems umfasst das erste Fahrzeug und/oder das zweite Fahrzeug einen Manipulator der vorstehend beschriebenen Art. In anderen Worten kann das erste Fahrzeug und/oder das zweite Fahrzeug des erfindungsgemäßen Systems durch das erfindungsgemäße autonome Fahrzeug ausgebildet sein.

Sofern nicht abweichend angegeben können die beschriebenen Ausführungsformen und Ausführungsbeispiele miteinander kombiniert werden.

### Wege zur Ausführung der Erfindung

Die Erfindung wird im Folgenden anhand von Ausführungsbeispielen näher beschrieben. Die Ausführungen sollen den Erfindungsgedanken aber weder einengen noch abschließend wiedergeben.

In einem ersten Ausführungsbeispiel umfasst ein System ein erstes autonomes Fahrzeug mit elektrischem Antrieb und ein zweites autonomes Fahrzeug mit elektrischem Antrieb. Die beiden Fahrzeuge können Einrichtungen umfassen, die einen teilautonomen Betrieb der Fahrzeuge ermöglichen, etwa ein Cockpit oder eine Fahrerkanzel.

Im diskutierten Ausführungsbeispiel umfasst das System eine Verbindungseinrichtung, die starr ausgebildet ist und an ihren gegenüberliegenden Enden jeweils eine Kupplung zur Herstellung einer lösbaren Verbindung mit dem ersten Fahrzeug und dem zweiten Fahrzeug aufweist. Die beiden Kupplungen sind dabei als Kugelkopf- oder Zugkugelkupplung ausgebildet. Dabei ist an einem Heck des ersten Fahrzeugs und an einer Front des zweiten Fahrzeugs jeweils ein kugelförmiges Verbindungsmittel vorgesehen, welche Verbindungsmittel in einer Kugelpfanne der Verbindungseinrichtung aufgenommen sein können, um das erste Fahrzeug mittels der Verbindungseinrichtung mit dem zweiten Fahrzeug zu verbinden. Beim Ankuppeln wird die geöffnete Kupplung (mit der Kugelpfanne) auf das kugelförmige Verbindungsmittel des ersten und des zweiten Fahrzeugs gesetzt und, beispielsweise durch einen Hebelmechanismus oder magnetisch, verriegelt.

Während die kugelförmigen Verbindungsmittel jeweils einen mehrpoligen Magnetring aufweisen können, welcher Magnetring drehstarr mit dem Verbindungsmittel verbunden oder einstückig mit diesem ausgebildet ist, können die Kugelpfannen ein im Wesentlichen unmagnetisches Gehäuse, insbesondere aus rostfreiem Stahl (Nirosta), sowie einen oder mehrere Hall-Sensoren umfassen.

Die Verbindungseinrichtung ist dabei mit einer Sensoreinrichtung ausgestattet, welche Sensoreinrichtung einen Betriebszustand des ersten Fahrzeugs, des zweiten Fahrzeugs und/oder der Verbindungseinrichtung überwacht bzw. erfasst. Der Betriebszustand kann dabei durch eine oder mehrere Betriebsgrößen festgelegt sein. Beispielsweise kann die Sensoreinrichtung Zug-, Druck- und/oder Torsionskräfte, die auf die Verbindungseinrichtung wirken, eine Neigung des ersten Fahrzeugs und/oder des zweiten Fahrzeugs, beispielsweise relativ zu einer Neigung der Verbindungseinrichtung relativ zur Horizontalen, aktuelle Lage- oder Richtungsänderungen des ersten Fahrzeugs, des zweiten Fahrzeugs und/oder der Verbindungseinrichtung, und/oder aktuelle Rotationsgeschwindigkeiten des ersten Fahrzeugs, des zweiten Fahrzeugs und/oder der Verbindungseinrichtung relativ zueinander erfassen.

Eine Recheneinrichtung, die entweder in der Verbindungseirichtung oder in dem ersten Fahrzeug und/oder dem zweiten Fahrzeug, untergebracht sein kann, generiert auf Basis von Messdaten der Sensoreinrichtung, sowie gegebenenfalls unter Berücksichtigung von Sensormessungen des ersten Fahrzeugs und/oder des zweiten Fahrzeugs, Steuerungssignale für das erste Fahrzeug und/oder das zweite Fahrzeug. Beispielsweise kann es sich bei der Recheneinrichtung um ein Steuergerät des ersten Fahrzeugs oder des zweiten Fahrzeugs handeln. Bei den Sensormessungen des ersten Fahrzeugs und/oder des zweiten Fahrzeugs kann es sich beispielsweise um Messdaten von Gewichtssensoren handeln, welche Gewichtssensoren beispielsweise im Bereich der Radaufhängungen des jeweiligen Fahrzeugs vorgesehen sein können, um Messdaten eines Gyroskopsensors, welcher Gyroskopsensor beispielsweise zentral im ersten Fahrzeug und/oder im zweiten Fahrzeug angeordnet sein kann, um Messdaten eines GPS-Empfängers, welcher GPS-Empfänger beispielsweise im ersten Fahrzeug und/oder im zweiten Fahrzeug angeordnet sein kann, und/oder um Messdaten von Sensoren eines Antiblockiersystems des ersten Fahrzeugs und/oder des zweiten Fahrzeugs.

Ein zweites Ausführungsbeispiel betrifft ein autonomes Fahrzeug mit elektrischem Antrieb, auf welchem Fahrzeug ein Manipulator montiert ist. Dabei ist der Manipulator durch einen autonomen Greifarm mit integrierter Kamera und einem Bildverarbeitungssystem ausgebildet. Das autonome Fahrzeug und der autonome Greifarm können unabhängig voneinander Funktionen erfüllen, beispielsweise kann das Fahrzeug angewiesen werden, ein bestimmtes Gebiet abzufahren, und kann der Greifarm dabei die Umgebung des Fahrzeugs mittels der Kamera überwachen und zu bergende Personen oder Gegenstände mittels, vorzugsweise KI-gestützter, Bildverarbeitung identifizieren.

Beispielsweise kann das Fahrzeug angewiesen werden, ein Gebiet, in dem gerade Kampfhandlungen vor sich gehen, also ein Kampfgebiet, abzufahren. Sobald der Greifarm eine verletzte Person identifiziert hat, kann dieser Steuerungssignale an das Fahrzeug übermitteln, um das Fahrzeug an die Position der verletzten Person zu bewegen. Dort angekommen kann der Greifarm die verletzte Person greifen und/oder bergen bzw. auf das Fahrzeug laden. Sobald dies geschehen ist, können weitere Steuerungssignale an das Fahrzeug übermittelt werden, um dem Fahrzeug entweder die Fortsetzung seiner ursprünglichen Route durch das Kampfgebiet, oder aber das Verlassen des Kampfgebietes auf kürzest möglichem Wege zu signalisieren.

## Patentansprüche

1. System umfassend zumindest ein erstes, insbesondere elektrisch angetriebenes, autonomes Fahrzeug, ein zweites, insbesondere elektrisch angetriebenes, autonomes Fahrzeug und eine Verbindungseinrichtung, über welche Verbindungseinrichtung das erste Fahrzeug mit dem zweiten Fahrzeug verbunden ist, wobei die Verbindungseinrichtung zumindest
- eine erste Kupplung zur Herstellung einer lösbaren Verbindung mit dem ersten Fahrzeug,
- eine zweite Kupplung zur Herstellung einer lösbaren Verbindung mit dem zweiten Fahrzeug, sowie
- eine Sensoreinrichtung zur Erfassung zumindest eines Betriebszustands des ersten Fahrzeugs, des zweiten Fahrzeugs und/oder der Verbindungseinrichtung umfasst,
und wobei das erste Fahrzeug, das zweite Fahrzeug und/oder die Verbindungseinrichtung eine Recheneinrichtung aufweist oder aufweisen, welche Recheneinrichtung zur Generierung von Steuerungssignalen für das erste Fahrzeug und/oder das zweite Fahrzeug auf Basis von Messdaten der Sensoreinrichtung ausgebildet ist.

2. System nach Anspruch 1, **dadurch gekennzeichnet, dass** die Sensoreinrichtung zumindest einen Neigungssensor zur Erfassung einer Neigung des ersten Fahrzeugs, des zweiten Fahrzeugs und/oder der Verbindungseinrichtung umfasst.

3. System nach einem der Ansprüche 1 oder 2, **dadurch gekennzeichnet, dass** die Sensoreinrichtung zumindest einen Kraftsensor zur Erfassung von Zug- und Druckkräften umfasst.

4. System nach einem der Ansprüche 1 bis 3, **dadurch gekennzeichnet, dass** die Sensoreinrichtung zumindest ein Gyroskop zur Erfassung von Lage- und Richtungsänderungen umfasst.

5. System nach einem der Ansprüche 1 bis 4, **dadurch gekennzeichnet, dass** die Sensoreinrichtung zumindest einen Drehratensensor zur Erfassung einer Rotationsgeschwindigkeit des ersten Fahrzeugs, des zweiten Fahrzeugs und/oder der Verbindungseinrichtung umfasst.

6. System nach einem der Ansprüche 1 bis 5, **dadurch gekennzeichnet, dass** die Verbindungseinrichtung zumindest ein, vorzugsweise GPS-fähiges, Navigationssystem zur Positionsbestimmung, Richtungsbestimmung und/oder Geschwindigkeitsbestimmung umfasst.

7. System nach einem der Ansprüche 1 bis 6, **dadurch gekennzeichnet, dass** die erste Kupplung und/oder die zweite Kupplung als Zugkugelkupplung ausgebildet ist bzw. sind, welche Zugkugelkupplung zumindest einen Hall-Sensor umfasst.

8. System nach einem der Ansprüche 1 bis 7, **dadurch gekennzeichnet, dass** die Recheneinrichtung dazu eingerichtet ist, Messdaten des ersten Fahrzeugs und/oder des zweiten Fahrzeugs zu empfangen und bei der Generierung der Steuerungssignale zu berücksichtigen.

9. System nach einem der Ansprüche 1 bis 8, **dadurch gekennzeichnet, dass** die Recheneinrichtung dazu eingerichtet ist, die Steuerungssignale für das zweite Fahrzeug derart zu generieren, dass das erste Fahrzeug und das zweite Fahrzeug, zumindest innerhalb eines vorgebbaren Toleranzbereiches, spurtreu sind.

10. System nach einem der Ansprüche 1 bis 9, **dadurch gekennzeichnet, dass** die Recheneinrichtung dazu eingerichtet ist, die Steuerungssignale für das zweite Fahrzeug derart zu generieren, dass das zweite Fahrzeug unter Zug über die Verbindungseinrichtung mit dem ersten Fahrzeug verbunden ist.

11. System nach einem der Ansprüche 1 bis 10, **dadurch gekennzeichnet, dass** die Recheneinrichtung dazu eingerichtet ist, bei der Generierung von Steuerungssignalen für das zweite Fahrzeug für einen in der Zukunft liegenden Zeitpunkt eine Lenkbewegung und/oder eine Geschwindigkeitsänderung des ersten Fahrzeugs in einem in der Vergangenheit liegenden Zeitpunkt zu berücksichtigen.

12. System nach einem der Ansprüche 1 bis 11, **dadurch gekennzeichnet, dass** die Recheneinrichtung dazu eingerichtet ist, bei der Generierung von Steuerungssignalen für das zweite Fahrzeug für einen in der Zukunft liegenden Zeitpunkt ein Track des ersten Fahrzeugs zu berücksichtigen.

13. System nach einem der Ansprüche 1 bis 12, **dadurch gekennzeichnet, dass** das erste Fahrzeug und das zweite Fahrzeug Einzelradaufhängungen aufweisen, wobei sämtliche Räder des ersten Fahrzeugs und des zweiten Fahrzeugs mittels Einzelradaufhängung befestigt und einzeln antreibbar und lenkbar sind.

14. Verfahren zur Steuerung eines Systems, das System umfassend zumindest ein erstes, insbesondere elektrisch angetriebenes, autonomes Fahrzeug, ein zweites, insbesondere elektrisch angetriebenes, autonomes Fahrzeug und eine Verbindungseinrichtung, über welche Verbindungseinrichtung das erste Fahrzeug mit dem zweiten Fahrzeug verbunden ist, wobei die Verbindungseinrichtung zumindest eine erste Kupplung zur Herstellung einer lösbaren Verbindung mit dem ersten Fahrzeug, eine zweite Kupplung zur Herstellung einer lösbaren Verbindung mit dem zweiten Fahrzeug, sowie eine Sensoreinrichtung umfasst, welche Sensoreinrichtung zumindest einen Betriebszustand des ersten Fahrzeugs, des zweiten Fahrzeugs und/oder der Verbindungseinrichtung erfasst, und wobei das erste Fahrzeug, das zweite Fahrzeug und/oder die Verbindungseinrichtung eine Recheneinrichtung aufweist oder aufweisen, welche Recheneinrichtung auf Basis von Messdaten der Sensoreinrichtung Steuerungssignale für das erste Fahrzeug und/oder das zweite Fahrzeug generiert.

15. Autonomes Fahrzeug umfassend einen auf dem Fahrzeug montierten Manipulator, wobei der Manipulator als autonomes System ausgebildet ist.
